# EUROPEAN PATENT SPECIFICATION

(11) **EP 2 187 021 B1**
(45) Date of publication and mention of the grant of the patent: **21.09.2016**
(21) Application number: 08834165.6
(22) Date of filing: 24.09.2008
(51) Int. Cl.: F02C 7/18, F01D 25/00, F01D 25/12, F02C 7/00, F02C 7/24, F23R 3/06, F23R 3/16, F23R 3/28, F23R 3/42, F23R 3/00

(54) **GAS TURBINE COMBUSTOR**
GASTURBINENBRENNKAMMER
CHAMBRE DE COMBUSTION DE TURBINE À GAZ

(30) Priority: 25.09.2007 JP 2007247226
(43) Date of publication of application: 19.05.2010
(73) Proprietor: Mitsubishi Hitachi Power Systems, Ltd., Yokohama 220-8401 (JP)
(72) Inventor: MAWATARI, Masayuki, Takasago-shi Hyogo 676-8686 (JP); ISHIGURO, Tatsuo, Takasago-shi Hyogo 676-8686 (JP); NAKAMURA, Sosuke, Takasago-shi Hyogo 676-8686 (JP); TANAKA, Katsunori, Takasago-shi Hyogo 676-8686 (JP)
(74) Representative: Henkel, Breuer & Partner
(86) International application number: PCT/JP2008/067189
(87) International publication number: WO 2009/041436

(56) References cited:
- EP-A2- 1 143 201
- JP-A- 9 303 777
- JP-A- H1 015 743
- JP-A- 2000 145 479
- JP-A- 2000 145 479
- JP-A- 2001 254 634
- JP-A- 2001 289 062
- JP-A- 2002 155 757
- JP-A- 2002 155 757
- JP-A- 2007 120 504
- JP-A- 2007 120 504
- US-A- 4 195 474
- US-A1- 2004 020 212
- US-A1- 2005 047 907

## Description

### Technical Field

The present invention relates to a gas turbine combustor and particularly to a gas turbine combustor as a part of a gas turbine combined cycle plant.

### Background Art

There are known techniques for cooling a gas turbine combustor using different cooling mediums.

JP-Heisei 09-303777A (first conventional example) discloses one of such techniques. According to the first conventional example, when a load of a gas turbine is low, the air pressurized by a compressor cools a wall surface of the combustor. When the load of the gas turbine is higher, another cooling medium such as steam is added to cool the wall surface of the combustor. The other cooling medium is collected after cooling and not discharged into combustion gas. Thus, the technique disclosed in the first conventional example is considered to cool the combustor according to a heat load fluctuation.

WO 98/37311A (second conventional Example) discloses a method of modifying a steam cooling transition section of a gas turbine combustor into an air cooling transition section.

JP-2002-317933A (third conventional example) discloses a gas turbine combustor that supplies film air along a downstream inner side surface of each main nozzle so as to reduce combustion oscillation of the gas turbine combustor.

JP-2000-145480A (fourth conventional example) discloses a cooling structure of a gas turbine combustor pilot cone.

EP 1143201A discloses a gas turbine conbustion liner with a first region provided with an air cooling passage and a second region with a steam cooling passage, the second region being located downstream of the first region with regard to the flow of combustion gas.

### Disclosure of the Invention

It is an object of the present invention to efficiently cool a gas turbine combustor according to a heat load distribution.

The invention provides a gas turbine combustor with the features of claim 1 and a method of manufacturing a gas turbine combustor with the features of claim 11.

A gas turbine combustor according to the present invention includes a fuel supplying section and a combustion tube. The fuel supplying section supplies fuel to a combustion zone inside of the combustion tube. The combustion tube supplies combustion gas generated through combustion of the fuel to a gas turbine. The combustion tube includes a first region in which an air passage through which cooling air flows is formed; and a second region in which a steam passage through which cooling steam flows is formed. The second region is located downstream of the first region in a direction of mainstream flow of the combustion gas.

The air passage includes a first air passage portion, a second air passage portion extending from the first air passage portion into an upstream direction opposite to the mainstream flow direction, and a third air passage portion extending from the first air passage portion to an upstream direction opposite to the mainstream flow direction of the combustion gas. The cooling air passes through the second air passage portion, the first air passage portion, and the third air passage portion in this order and flows into the combustion zone.

The first air passage portion preferably includes a bent portion in which a guide plate is provided.

The air passage preferably includes a plurality of cavities; a first air passage portion and a second air passage portion extending from each of the plurality of cavities into an upstream direction opposite to the mainstream flow direction. The cooling air is supplied to the first air passage portion, passes through the second air passage portion, and flows into the combustion zone. The plurality of cavities are arranged along a circumferential direction of the combustion tube. The plurality of cavities are isolated from one another.

An ejection opening ejecting the cooling air passing through the air passage in a film along an inner circumferential surface of the combustion tube is preferably provided in the combustion tube.

The steam passage preferably extends in the mainstream flow direction of the combustion gas. The cooling steam preferably flows through the steam passage toward the first region.

The gas turbine combustor preferably further includes an acoustic chamber provided in the first region. The air passage passes the cooling air to an acoustic chamber inner space. An acoustic wave absorbing hole communicating the acoustic chamber inner space with the combustion zone is provided in the first region.

The fuel supplying section preferably includes a plurality of fuel nozzles arranged along a circle having an axis of the combustion tube as a center. At least one of the air passage and the steam passage preferably includes a plurality of passages extending in the mainstream flow direction of the combustion gas. The plurality of passages preferably includes a fuel-nozzle corresponding passage arranged downstream of the plurality of fuel nozzles in the mainstream flow direction, and an inter-fuel-nozzle corresponding passage arranged between adjacent two of the plurality of fuel nozzles downstream in the mainstream flow direction. An equivalent diameter of the fuel-nozzle corresponding passage is preferably larger than an equivalent diameter of the inter-fuel-nozzle corresponding passage.

The gas turbine combustor preferably further includes an acoustic chamber provided in the first region. The plurality of passages are preferably included in the air passage. Each of the fuel-nozzle corresponding passage and the inter-fuel-nozzle corresponding passage preferably supplies the cooling air from an opening provided in the first region into the acoustic chamber inner space. The acoustic wave absorbing hole communicating the acoustic chamber inner space with the combustion zone is preferably provided in the first region. The fuel-nozzle corresponding passage preferably includes an equivalent diameter monotonously decreasing portion having an equivalent diameter monotonically decreasing as being closer to the opening.

The fuel supplying section preferably includes a plurality of fuel nozzles arranged along a circle centering about an axis of the combustion tube. The air passage preferably includes a plurality of passages extending in the mainstream flow direction of the combustion gas. The plurality of passages includes a fuel-nozzle corresponding passage arranged downstream of the plurality of fuel nozzles in the mainstream flow direction; and an inter-fuel-nozzle-corresponding passage arranged between adjacent two of the plurality of fuel nozzles downstream in the mainstream flow direction. The fuel-nozzle-corresponding passage includes a passage enlarged portion having a locally large equivalent diameter. The inter-fuel-nozzle corresponding passage does not include a passage enlarged portion having a locally large equivalent diameter.

Each of the fuel-nozzle corresponding passage and the inter-fuel-nozzle corresponding passage preferably supplies the cooling air from the opening provided in the first region into an acoustic chamber inner space. The fuel-nozzle corresponding passage preferably includes an equivalent diameter monotonic decrease portion having an equivalent diameter monotonically decreasing as the fuel-nozzle corresponding passage is closer to the opening.

A method of manufacturing a gas turbine combustor according to the present invention includes steps of: forming an air groove in the first region of a first plate including the first region and the second region; forming a steam groove in the second region; superimposing a second plate on the first plate, connecting the second plate to the first plate, and forming an air passage corresponding to the air groove and a steam passage corresponding to the steam groove; and bending the first plate and the second plate, and forming a combustion tube of the gas turbine combustor. The first region is located upstream of the second region in the mainstream flow direction of combustion gas flowing in the combustion zone inside of the combustion tube. The step of forming the air groove includes steps of: forming a bent groove in which a guide plate is provided; forming a first groove extending from one end portion of the bent groove in a direction away from the second region; and forming a second groove extending from other end portion of the bent groove in the direction away from the second region. The step of forming the bent groove includes steps of: moving an end mill along a first locus in a generally U shape, and forming a first U groove in the first plate; and moving the end mill along a second locus in a generally U shape, and forming a second U groove in the first plate. The guide plate is formed between the first U groove and the second U groove.

According to the present invention, the gas turbine combustor is efficiently cooled according to a heat load distribution.

### Brief Description of the Drawings

FIG. 1 shows a gas turbine combustor;
FIG. 2 is a longitudinal cross sectional view of a combustion tube;
FIG. 3 shows passages provided in the combustion tube;
FIG. 4 shows passages provided in the combustion tube;
FIG. 5 shows passages provided in the combustion tube;
FIG. 6 shows passages provided in the combustion tube;
FIG. 7 shows passages provided in the combustion tube;
FIG. 8A shows a plate in which grooves to serve as passages in the combustion tube are formed;
FIG. 8B shows a state of coupling another plate to the plate in which the grooves are formed;
FIG. 8C shows a state of bending the coupled plates cylindrically;
FIG. 9A is a cross sectional view of the combustion tube;
FIG. 9B is an enlarged view of a portion surrounded by a dotted circle of FIG. 9A;
FIG. 10 shows passages provided in the combustion tube;
FIG. 11A shows relationship between a heat transfer rate and a flow direction distance of a cooling medium in a passage that does not include a passage enlarged portion;
FIG. 11B shows relationship between the heat transfer coefficient and the flow direction distance of the cooling medium in a passage that includes a passage enlarged portion;
FIG. 12A shows a shape of a passage provided in the combustion tube;
FIG. 12B shows a shape of the passage provided in the combustion tube; and
FIG. 12C shows a shape of the passage provided in the combustion tube.

### Best Mode for Carrying Out the Invention

A gas turbine combustor, a method of cooling the gas turbine combustor and a method of manufacturing the gas turbine combustor according to the present invention will be described hereinafter with reference to the attached drawings.

### [First Embodiment]

A gas turbine according to a first embodiment of the present invention constitutes a part of a gas turbine combined cycle plant. The gas turbine combined cycle plant includes a steam turbine system as well as the gas turbine.

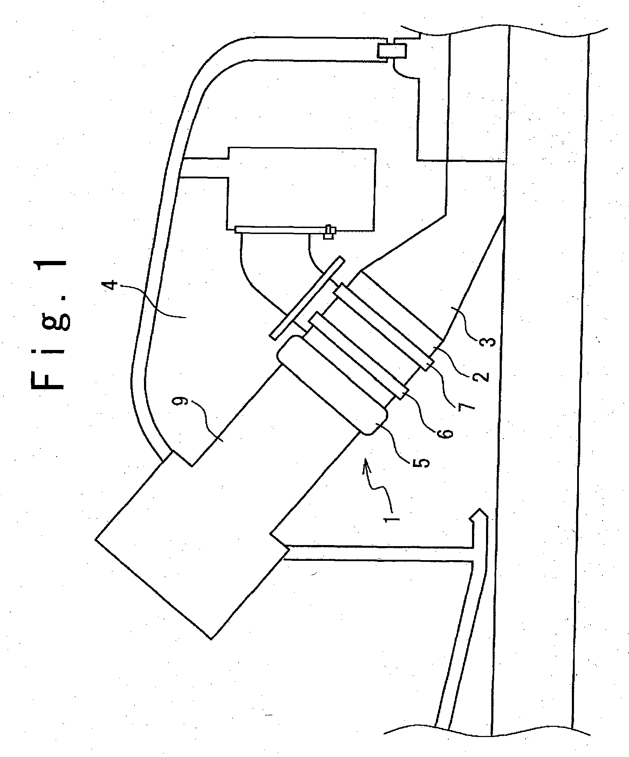

The gas turbine includes a combustor 1 shown in FIG. 1, a compressor (not shown) and a turbine (not shown). The compressor generates pressurized air. A part of the pressurized air is supplied to the combustor 1 as combustion air. The other part of the pressurized air is supplied to the combustor 1 as cooling air. The combustor 1 combusts fuel by using combustion air and generates combustion gas. The cooling air is mixed with the combustion gas after cooling the combustor 1. The combustor 1 supplies the combustion gas mixed with the cooling air to the turbine. The turbine receives energy from the combustion gas, drives the compressor and a generator, and discharges the combustion gas as exhaust gas. A steam turbine system generates steam by using the exhaust gas, and drives a steam turbine by using the steam. The steam is extracted from the steam turbine system and used to cool the combustor 1. The steam that cools the combustor 1 is returned to the steam turbine system and supplied to the steam turbine.

As shown in FIG. 1, the combustor 1 is disposed within a wheel chamber 4. The combustor 1 includes a combustion tube 2, a fuel supplying section 9 and a tail tube 3. A mainstream flow direction of the combustion gas in an inner space of the combustion tube 2 is referred to as a "mainstream flow direction". The fuel supplying section 9 is connected to an upstream side of the combustion tube 2 in the mainstream flow direction. The tail tube 3 is connected to a downstream side of the combustion tube 2 in the mainstream flow direction. An acoustic chamber 5, a steam jacket 6 and a steam jacket 7 are provided on an outer surface of the combustion tube 2. Each of the acoustic chamber 5, the steam jacket 6 and the steam jacket 7 is formed in a band shape to surround an entire circumference of the combustion tube 2 in a circumferential direction. Each of the acoustic chamber 5, the steam jacket 6 and the steam jacket 7 forms an annular inner space. The steam jacket 6 is arranged downstream of the acoustic chamber 5 in the mainstream flow direction. The steam jacket 7 is arranged downstream of the steam jacket 6 in the mainstream flow direction.

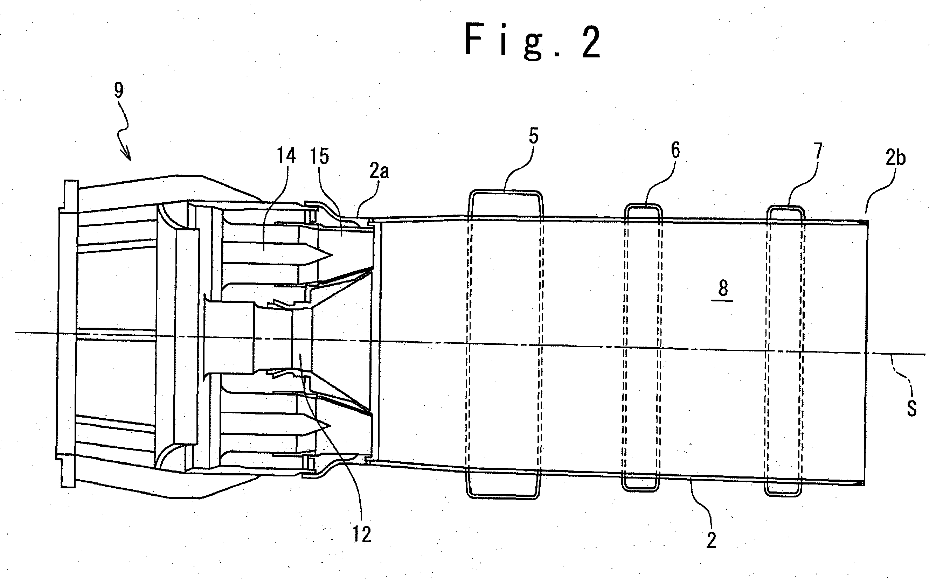

FIG. 2 is a longitudinal sectional view of the fuel supplying section 9 and the combustion tube 2. The fuel supplying section 9 and the combustion tube 2 are formed to be substantially rotationally symmetric about a central axis S. The fuel supplying section 9 is joined to an upstream end portion 2a of the combustion tube 2 in the mainstream flow direction. A downstream end portion 2b of the combustion tube 2 in the mainstream flow direction is arranged on an opposite side to the upstream end portion 2a and joined to the tail tube 3. The fuel supplying section 9 includes a pilot nozzle 12 arranged on the central axis S and a plurality of main nozzles 14 arranged to surround the pilot nozzle 12. The plurality of main nozzles 14 are arranged on a circumference about the central axis S. Each of the pilot nozzle 12 and the main nozzles 14 ejects fuel toward a combustion zone 8 that serves as the inner space of the combustion tube 2. Each main nozzle 14 forms a premixed flame of the fuel and the combustion air. An extension tube 15 for temporarily narrowing a flow of the fuel and the combustion air is provided downstream of each main nozzle 14 in the mainstream flow direction. The extension tube 15 promotes mixing the fuel with the combustion air.

In the combustion zone 8, the fuel is combusted and the combustion gas is generated. The combustion gas mainstream flows from left to right in FIG. 2 almost in parallel to the central axis S, passes through the tail tube 3 and flows into the turbine. As the combustion gas flows more downstream, a combustion reaction of the combustion gas becomes more active and temperature rises. Therefore, a heavier heat load is imposed on a more downstream side of the combustion tube 2 in the mainstream flow direction.

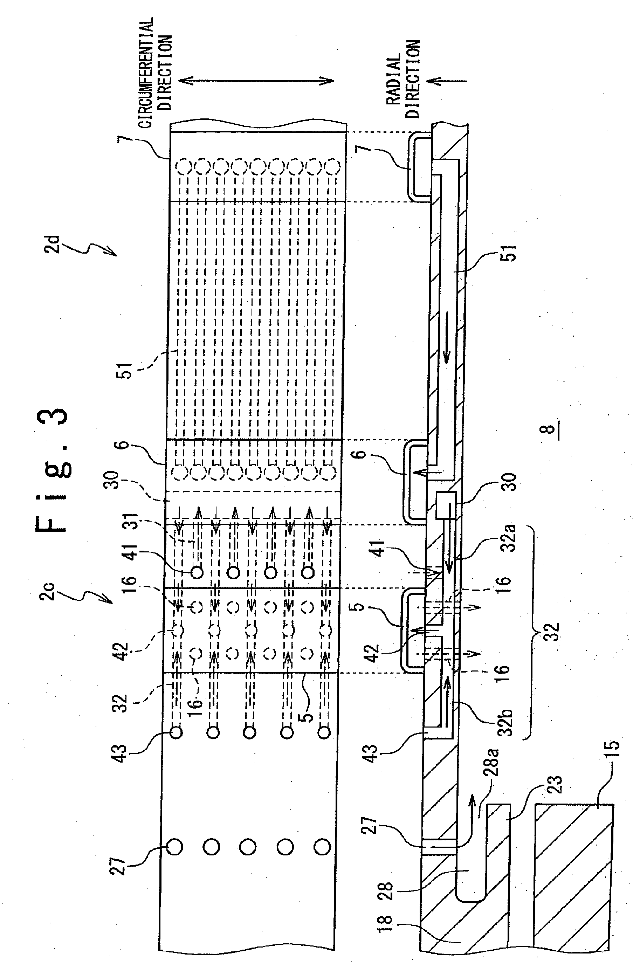

Referring to FIG. 3, a structure for cooling the combustion tube 2 will be described.

An external ring 18 is provided on an entire inner circumference of the combustion tube 2 corresponding to a downstream end of the extension tube 15 of the combustion tube 2 in the mainstream flow direction. The external ring 18 is rotationally symmetric about the central axis S. It is supposed that a cylindrical coordinate system using the central axis S as a Z axis is considered. A moving radius length is represented by R and an angle is represented by θ. A Z coordinate of the external ring 18 is equal to that of the downstream end of the extension tube 15 in the mainstream flow direction. Since the external ring 18 is arranged outside of the downstream end of the extension tube 15 in the downstream direction, an R coordinate of the external ring 18 is larger than that of the downstream end of the extension tube 15 in the downstream direction. An inner end of the external ring 18 extends in the mainstream flow direction and forms an annular guide 23. Likewise, the guide 23 is provided on the entire inner circumference of the combustion tube 2. The guide 23 is rotationally symmetric about the central axis S. A guide space 28 between the guide 23 and an inner wall surface of the combustion tube 2 is an annular space about the central axis S. An air inlet hole 27 is provided in the combustion tube 2 to introduce cooling air supplied from the compressor into the guide space 28. The cooling air introduced into the guide space 28 is ejected in the mainstream flow direction from an ejection opening 28a serving as a downstream portion of the guide space 28 in the mainstream flow direction along an inner circumferential surface of the combustion tube 2 in the form of film air. A Z coordinate of the ejection opening 28a is equal to that of a downstream end of the extension tube 15 in the mainstream flow direction. The film air reduces a fuel-air ratio of the premixed flame in a region near the inner circumferential surface of the combustion tube 2 and also reduces a combustion load rate, thereby suppressing oscillating combustion.

A circumferential cavity 30 extending in a circumferential direction of the combustion tube 2 is provided downstream of the acoustic chamber 5 in the mainstream flow direction. A plurality of air passages 31 and a plurality of air passages 32 extend in an upstream direction opposite to the mainstream flow direction from the circumferential cavity 30. The plurality of air passages 31 are arranged along the circumferential direction of the combustion tube 2. The plurality of air passages 32 are arranged along the circumferential direction of the combustion tube 2. An upstream end of each air passage 31 in the mainstream flow direction is open to an outer circumferential surface of the combustion tube 2 in an opening 41 located downstream of the acoustic chamber 5. An upstream end of each air passage 32 is open to the outer circumferential surface of the combustion tube 2 in an opening 43 located upstream of the acoustic chamber 5 in the mainstream flow direction and downstream of the air inlet hole 27 in the mainstream flow direction. An intermediate portion of each air passage 32 communicates with an inner space of the acoustic chamber 5 by an opening 42. A portion between the opening 42 of each air passage 32 and the circumferential cavity 30 is referred to as an "air passage portion 32a". A portion between the openings 43 and 42 of each air passage 32 is referred to as an "air passage portion 32b". A plurality of acoustic wave absorbing holes 16 communicating the inner space of the acoustic chamber 5 with the combustion zone 8 are provided in the combustion tube 2.

A plurality of steam passages 51 connecting an inner space of the steam jacket 6 to an inner space of the steam jacket 7 are provided downstream of the circumferential cavity 30 of the combustion tube 2 in the mainstream flow direction. Each steam passage 51 extends in the mainstream flow direction. The plurality of steam passages 51 are arranged along the circumferential direction of the combustion tube 2.

The air passages 31, the air passages 32, the circumferential cavity 30, the acoustic chamber 5, the acoustic wave absorbing holes 16, the external ring 18 and the air inlet hole 27 are provided in an upstream region 2c. The steam passages 51 are provided in a downstream region 2d downstream of the upstream region 2c in the mainstream flow direction. In the upstream region 2c, no steam passages are provided. In the downstream region 2d, no air passages are provided.

Steam is supplied into the inner space of the steam jacket 7 from the steam turbine system. The steam flows through the steam passages 51 in an upstream direction opposite to the mainstream flow direction and flows into the inner space of the steam jacket 6. The steam is returned from the inner space of the steam jacket 6 to the steam turbine system. The steam flowing through the steam passages 51 cools the downstream region 2d.

The cooling air flowing from the openings 43 into the air passage portions 32b flows through the air passage portions 32b in the mainstream flow direction, passes through the openings 42 and flows into the inner space of the acoustic chamber 5. The cooling air flowing from the openings 41 into the air passages 31 flows through the air passages 31 in the mainstream flow direction and flows into the circumferential cavity 30. The cooling air flows from the circumferential cavity 30 into the air passage portions 32a in an upstream direction opposite to the mainstream flow direction, passes through the openings 42 and flows into the inner space of the acoustic chamber 5. The cooling air in the inner space of the acoustic chamber 5 passes through the acoustic wave absorbing holes 16 and flows into the combustion zone 8.

In the present embodiment, since the steam having a large specific heat strongly cools the downstream region 2d with a heavy heat load, fatigue strength of the combustion tube 2 is improved. Furthermore, since the air cools the upstream region 2c with a light heat load, the flow rate of the steam for cooling the combustion tube 2 is sufficient to be low. Thus, a heat efficiency of the entire gas turbine combined cycle plant is improved.

In the present embodiment, the cooling air that cools the upstream region 2c is used to purge the inner space of the acoustic chamber 5. Accordingly, as compared with a case of cooling the upstream region 2c and purging the inner space of the acoustic chamber 5 by using different pressurized air, it is possible to increase a flow rate of the combustion air. As a result, combustion oscillation is suppressed and a concentration of nitrogen oxide in the exhaust gas is decreased.

In the present embodiment, the cooling air that flows from the air passages 31 into the circumferential cavity 30 changes a direction and then flows into the air passage portions 32a. Accordingly, a heat transfer rate of the circumferential cavity 30 is improved by a collision effect. As a result, the cooling air can sufficiently cool even a boundary portion between the upstream region 2c and the downstream region 2d. If a Z coordinate of the circumferential cavity 30 is equal to a Z coordinate of the steam jacket 6, the cooling air can cool the boundary portion more sufficiently.

In the present embodiment, the steam flows through the steam passages 51 toward the upstream region 2c. This reduces a temperature gap in the boundary portion between the upstream region 2c and the downstream region 2d. As a result, the fatigue strength of the combustion tube 2 is improved.

### [Second Embodiment]

The combustor 1 according to a second embodiment of the present invention is configured so that, as compared with the combustor 1 according to the first embodiment, a structure of the upstream region 2c is changed.

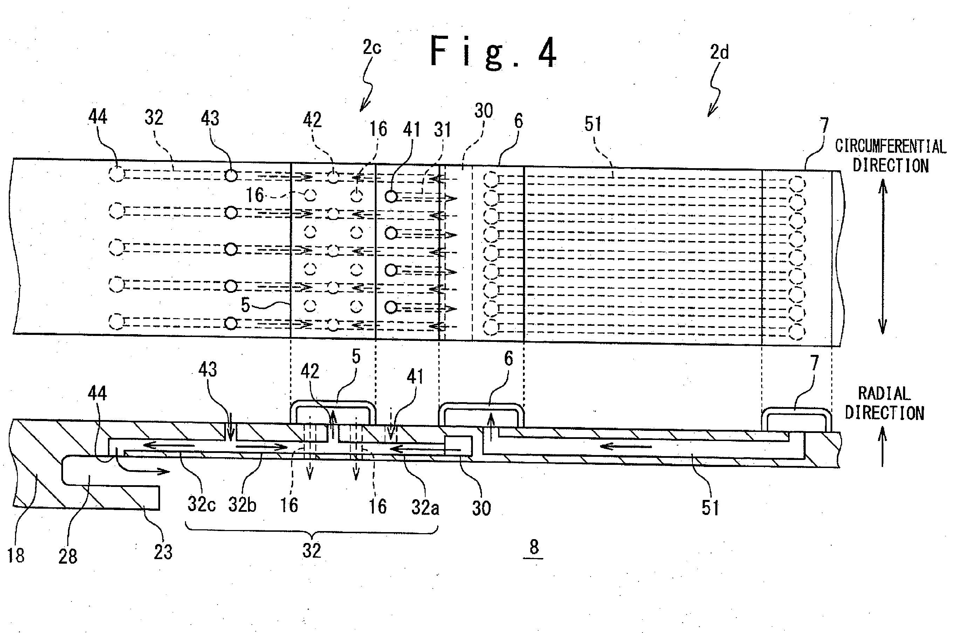

FIG. 4 shows a structure of the combustion tube 2 according to the second embodiment. In the present embodiment, the air inlet holes 27 are not provided. Each air passage 32 further includes an air passage portion 32c extending from the opening 43 to an opening 44 in an upstream direction opposite to the mainstream flow direction of combustion gas. A part of cooling air flowing from the opening 43 into each air passage 32 flows through the air passage portion 32b in the mainstream flow direction, passes through the opening 42 and flows into an inner space of the acoustic chamber 5. The other part of the cooling air flowing from the opening 43 into each air passage 32 flows through the air passage portion 32c in the upstream direction opposite to the mainstream flow direction, and flows from the opening 44 into the guide space 28 to form film air.

In the present embodiment, the film air is formed by using the cooling air that cools the upstream region 2c. Accordingly, as compared with a case of cooling the upstream region 2c and forming the film air by using different pressurized airs, it is possible to increase a flow rate of combustion air. As a result, combustion oscillation is further suppressed and a concentration of nitrogen oxide in exhaust gas is further decreased.

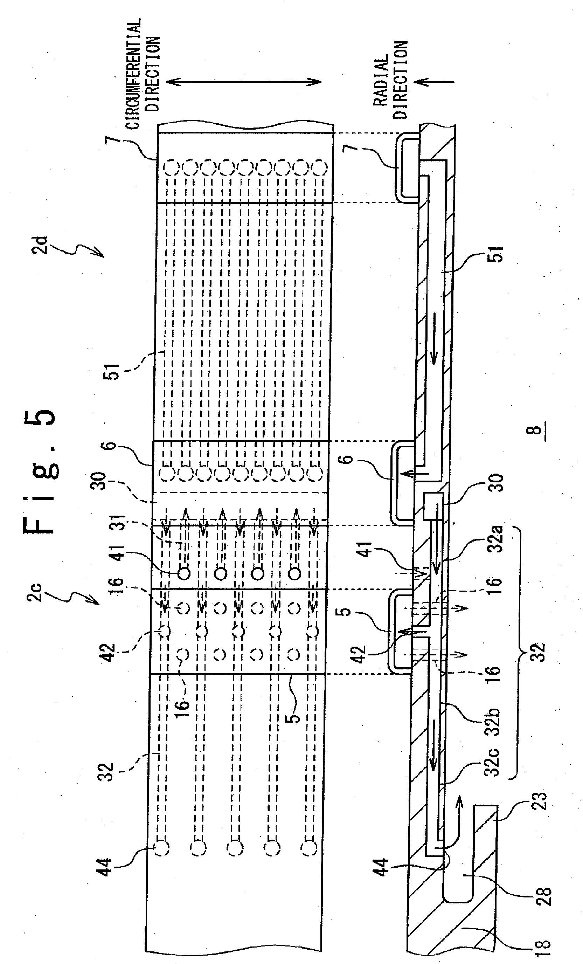

FIG. 5 shows the combustion tube 2 according to a modification of the second embodiment. In this modification, the openings 43 are not provided. Cooling air flowing from the opening 41 into each air passage 31 flows through the air passage 31 in the mainstream flow direction and flows into the circumferential cavity 30. The cooling air flows from the circumferential cavity 30 to the air passage portion 32a in the upstream direction opposite to the mainstream flow direction. A part of the cooling air flowing through the air passage portion 32a passes through the opening 42, flows into an inner space of the acoustic chamber 5, passes through the acoustic wave absorbing holes 16 and flows into the combustion zone 8. The other part of the cooling air flows through the air passage portions 32b and 32c in the upstream direction opposite to the mainstream flow direction, and flows into the guide space 28 from the opening 44 to form film air.

### [Third Embodiment]

The combustor 1 according to a third embodiment of the present invention is configured so that, as compared with the combustor 1 according to the first or second embodiment, a structure of the upstream region 2c is changed.

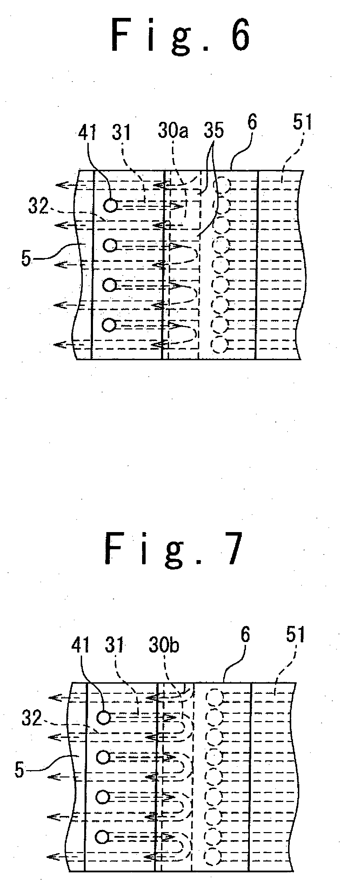

FIG. 6 shows a structure for cooling the combustion tube 2 according to the third embodiment. In the present embodiment, a plurality of independent passages are arranged along a circumferential direction of the combustion tube 2. The circumferential cavity 30 is separated into a plurality of cavities 30a by a plurality of partitions 35. The plurality of cavities 30a is arranged along the circumferential direction of the combustion tube 2. Each independent passage includes one cavity 30a, one air passage 31 extending from the cavity 30a in an upstream direction opposite to the mainstream flow direction, and one air passage 32 extending from the cavity 30a in the upstream direction opposite to the mainstream flow direction. One independent passage does not communicate with the other independent passages in the combustion tube 2.

In the case where the plurality of air passages 31 and the plurality of air passages 32 are connected to the circumferential cavity 30 communicating in the circumferential direction, a circumferential distribution is often generated in a flow rate of cooling air flowing through the air passages 31 and 32 by a circumferential distribution of pressure inside of the circumferential cavity 30. In the present embodiment, the circumferential distribution is prevented from being generated in the flow rate of the cooling air flowing through the air passages 31 and 32.

FIG. 7 shows the combustion tube 2 according to a modification of the third embodiment. In this modification, the cavities 30a are replaced by U-bent portions 30b. A guide plate is preferably provided in each of the bent portions 30b. The guide plate suppresses separation of flow of cooling air when the cooling air flows through the bent portions 30b, and reduces a pressure loss in the bent portions 30b. As a result, it is possible to obtain a desired cooling effect at a low flow rate of the cooling air.

The guide plate is preferably crescent-shaped. Since the crescent-shaped guide plate is easy to produce, a production time of the combustion tube 2 is shortened and cost is reduced.

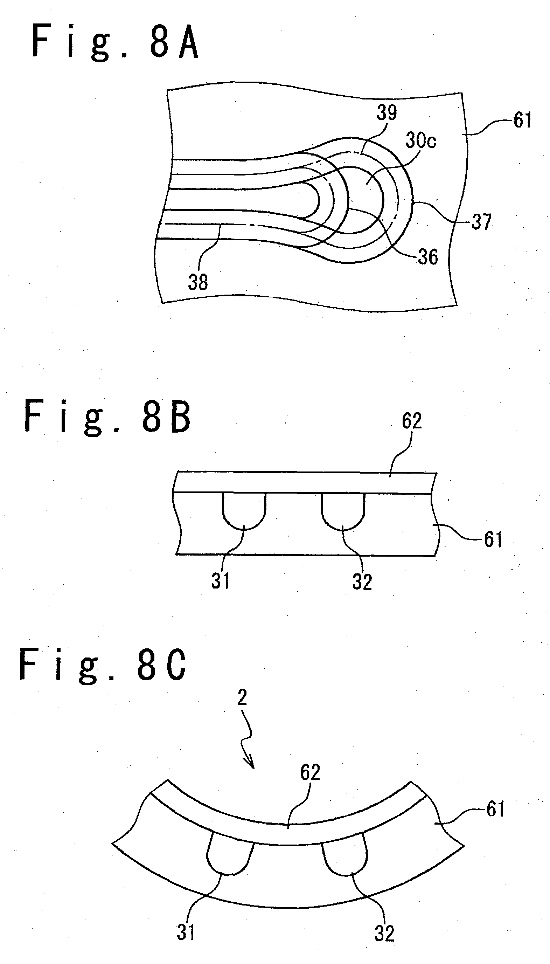

Referring to FIGS. 8A to 8C, a method of manufacturing the combustion tube 2 including crescent-shaped guide plates will be described.

First, a plate 61 is prepared to include a first region to serve as the upstream region 2c and a second region to serve as the downstream region 2d. First grooves to serve as the air passages 31, second grooves to serve as the air passages 32 and bent grooves to serve as the bent portions 30b are formed in the first region. Each of the first grooves extends from one end portion of each bent groove in a direction away from the second region. Each of the second grooves extends from the other end portion of the bent groove in the direction away from the second region. Steam grooves to serve as the steam passages 51 are formed in the second region.

FIG. 8A shows a portion of the plate 61 in which one bent groove is formed. An end mill such as a ball end mill is moved along a U-shaped locus 38 to form a U-groove 36 in the plate 61. An end mill is moved along a U-shaped locus 39 to form a U-groove 37 in the plate 61. At this time, a crescent-shaped guide plate 30c is formed between the U-grooves 36 and 37. The bent groove includes the U-groove 36, the U-groove 37 and the guide plate 30c. An end mill cutting the U-groove 36 and an end mill cutting the U-groove 37 may be either the same or different.

As shown in FIG. 8B, a plate 62 is superimposed on and connected to the plate 61 so as to form the air passages 31, the air passages 32, the bent portions 30b and the steam passages 51.

As shown in FIG. 8C, the plates 61 and 62 are bent to form the combustion tube 2.

Next, a technique for cooling the combustion tube 2 based on a circumferential heat load distribution will now be described.

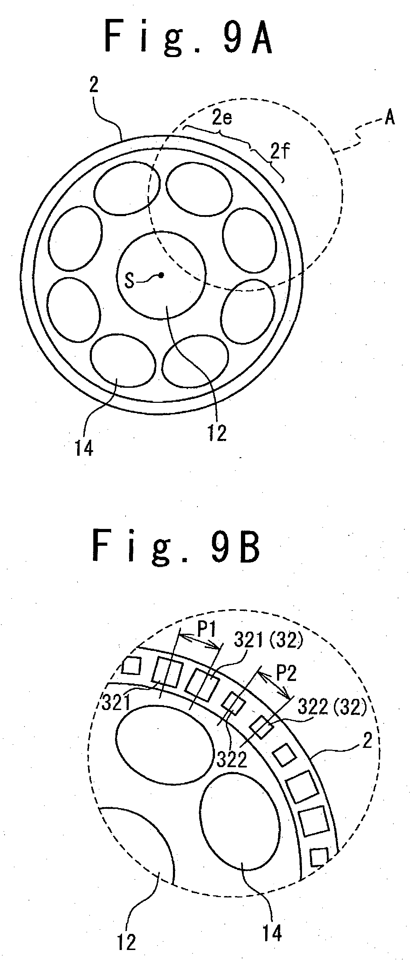

Referring to FIG. 9A, the combustion tube 2 includes main-nozzle downstream regions 2e arranged downstream of the main nozzles 14 in the mainstream flow direction, and inter-main-nozzle downstream regions 2f each arranged between the two adjacent main nozzles 14 in the mainstream flow direction. The main-nozzle downstream regions 2e and the inter-main-nozzle downstream regions 2f are alternately arranged along the circumferential direction of the combustion tube 2. In a cylindrical coordinate system using a central axis S as a Z axis, a coordinate θ of each main nozzle 14 is equal to that of the corresponding main-nozzle downstream region 2e. A coordinate θ of a portion between the two adjacent main nozzles 14 is equal to that of the corresponding inter-main-nozzle downstream region 2f.

In the combustion tube 2, a circumferential heat load distribution is present in which a heat load is heavy in each main-nozzle downstream region 2e and in which a heat load is light in each inter-main-nozzle downstream region 2f. In an upstream region of the combustion zone 8 in the mainstream flow direction, a combustion reaction is underway and combustion gas is mixed insufficiently. In a downstream region of the combustion zone 8 in the mainstream flow direction, the combustion reaction is almost completed and the combustion gas is mixed sufficiently. Therefore, the circumferential heat load distribution is relatively conspicuous in the upstream region 2c and relatively inconspicuous in the downstream region 2d.

### [Fourth Embodiment]

FIG. 9A is a cross-sectional view of the combustion tube 2 according to a fourth embodiment of the present invention. FIG. 9B is an enlarged view of a portion surrounded by a circle A of FIG. 9A. As shown in FIG. 9B, an equivalent diameter of each of air passages 321 serving as the air passages 32 arranged in the main-nozzle downstream regions 2e is larger than that of each of air passages 322 serving as the air passages 32 arranged in the inter-main-nozzle downstream regions 2f. Therefore, a flow rate of cooling air flowing through the air passage 321 is higher than that of cooling air flowing through the air passage 322. While FIG. 9B shows that two types of equivalent diameter are set for the air passages 32, three or more types of equivalent diameter may be set for the air passages 32.

In the present embodiment, the downstream regions 2e with a heavy heat load are strongly cooled and the cooling air for cooling the inter-main-nozzle downstream regions 2f with a light heat load is reduced.

In the present embodiment, a circumferential temperature distribution is prevented from being generated in the combustion tube 2. As a result, thermal stress caused by the circumferential temperature distribution decreases and fatigue strength of the combustion tube 2 increases.

If a circumferential pitch P1 of the air passages 321 is set narrower than a circumferential pitch P2 of the air passages 322, the above-stated effect is further enhanced.

A circumferential distribution of equivalent diameters stated above may be applied to the air passages 31 or to the steam passages 51. However, it is preferable in view of cost-effectiveness that the circumferential distribution of equivalent diameters stated above is applied only to the air passages 31 and the air passages 32 arranged in the upstream region 2c, and not applied to the steam passages 51 arranged in the downstream region 2d.

The circumferential distribution of equivalent diameters according to the present embodiment can be similarly applied to any of the first to third embodiments.

### [Fifth Embodiment]

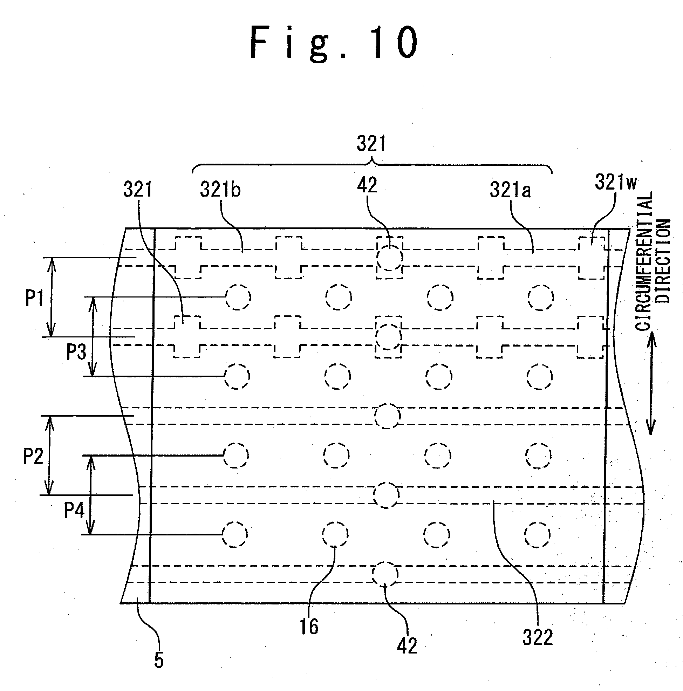

FIG. 10 shows the neighborhood of the acoustic chamber 5 in the combustion tube 2 according to a fifth embodiment of the present invention. Each of the air passages 321 serving as the air passages 32 provided in the main-nozzle downstream regions 2e includes an air passage portion 321a serving as the air passage portion 32a and an air passage portion 321b serving as the air passage portion 32b. A plurality of passage enlarged portions 321w are provided in each air passage 321 along a longitudinal direction (mainstream flow direction) of the air passage 321. Each air passage 321 has an equivalent diameter (a passage cross-sectional area of the passage) locally enlarged in the passage enlarged portions 321w. The passage enlarged portions 321w are provided in both the air passage portions 321a and 321b. In the air passages 322 serving as the air passages 32 provided in the inter-main-nozzle downstream regions 2f, passage enlarged portions such as the passage enlarged portions 321w are not provided.

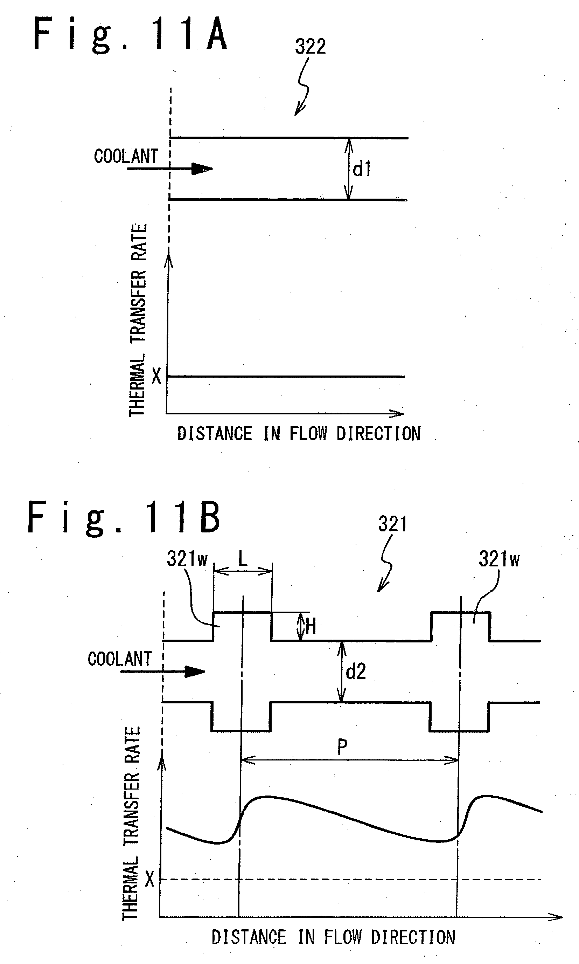

FIG. 11A is a graph showing a relationship between a heat transfer rate and a flow direction distance of each air passage 322. An equivalent diameter of the air passage 322 is fixed to a value d1 irrespectively of the flow direction distance. In the air passage 322, the heat transfer rate is fixed to a value X irrespectively of the flow direction distance.

FIG. 11B is a graph showing a relationship between a heat transfer rate and a flow direction distance of each air passage 321. An equivalent diameter of the air passage 321 is a value d2 in portions other than the passage enlarged portions 321w. In this case, the value d1 is equal to the value d2. A flow of cooling air flowing near a wall surface of the air passage 321 is cut off in the passage enlarged portions 321w and a boundary layer begins to be developed with the air passage 321 set as a starting point. Accordingly, in the air passage 321, the heat transfer rate varies in a range larger than the value X along the flow direction distance.

Preferably, a pitch P of the passage enlarged portions 321w in a longitudinal direction of the air passage 321 is equal to or smaller than ten times of the value d2. This is advantageous for increasing the heat transfer rate since the flow is cut off while the boundary layer is not developed yet.

A longitudinal distance L of each passage enlarged portion 321w is preferably 5 to 10 times of an enlargement depth H of the passage enlarged portion 321w. This is advantageous for increasing the heat transfer rate since it is possible to further ensure separation and re-bonding of the flow of the cooling air in the passage enlarged portion 321w. A direction of the enlargement depth is perpendicular to the longitudinal direction of the air passage 321. The air passage 321 is sometimes enlarged in the passage enlarged portions 321w in one of or each of a circumferential direction and a radial direction of the combustion tube 2.

The value d2 is preferably set larger than the value d1. In this case, an equivalent diameter of each passage enlarged portion 321w and an equivalent diameter of each air passage 321 in the portions other than the passage enlarged portions 321w are both larger than the equivalent diameter of the air passage 322.

Referring to FIG. 10, a circumferential pitch P1 of the air passages 321 is preferably set narrower than a circumferential pitch P2 of the air passages 322. In this case, a circumferential pitch P3 of the acoustic wave absorbing holes 16 in the main-nozzle downstream regions 2e is smaller than a circumferential pitch P4 of the acoustic wave absorbing holes 16 in the inter-main-nozzle downstream regions 2f.

The air passages 32 and the acoustic wave absorbing holes 16 according to the present embodiment can be similarly applied to any of the first to third embodiments.

### [Sixth Embodiment]

In a sixth embodiment of the present invention, an equivalent diameter (a passage cross-sectional area) of the air passage portions 321a serving as the air passage portion 32a arranged in the main-nozzle downstream region 2e monotonically decreases as the air passage portion 321a is closer to the opening 42.

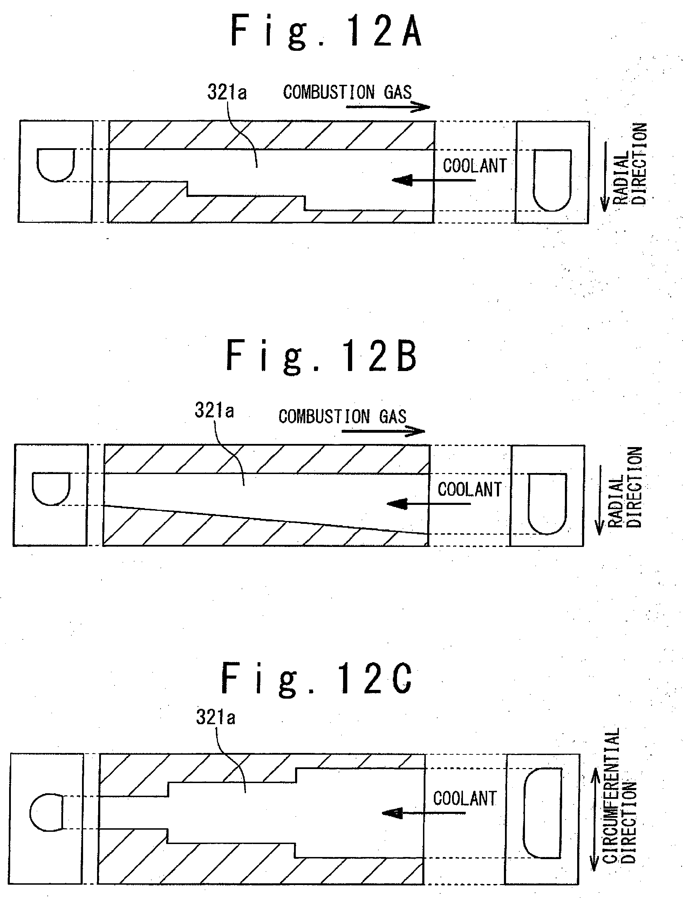

FIG. 12A shows the air passage 321 in which a passage width in a radial direction of the combustion tube 2 monotonically decreases step by step (discontinuously) as the air passage 321 is closer to the opening 42.

FIG. 12B shows the air passage portion 321a in which the passage width in the radial direction of the combustion tube 2 monotonically decreases continuously (smoothly) as the air passage portion 321a is closer to the opening 42.

FIG. 12C shows the air passage portion 321a in which the passage width in the radial direction of the combustion tube 2 monotonically decreases step by step (discontinuously) as the air passage portion 321a is closer to the opening 42.

The air passage portion 321a may be configured so that the passage width in a circumferential direction of the combustion tube 2 monotonically decreases step by step (discontinuously) as the air passage portion 321a is closer to the opening 42.

In the present embodiment, the equivalent diameter of the air passage portion 321a decreases as the air passage portion 321a is closer to the opening 42 serving as a cooling air outlet. Accordingly, a flow velocity of the cooling air increases as the air passage portion 321a is closer to the opening 42 serving as the outlet. Therefore, a heat transfer rate of the air passage portion 321a increases as the air passage portion 321a is closer to the opening 42 serving as the outlet. On the other hand, temperature of the cooling air rises as the air passage portion 321a is closer to the opening 42 serving as the outlet. In portions of the air passage portion 321a away from the opening 42, the combustion tube 2 is cooled by using a large temperature difference between the cooling air and a passage wall surface of the air passage portion 321a and pressure loss is low. In portions of the air passage portion 321a close to the opening 42, a temperature difference between the cooling air and the passage wall surface is small but the heat transfer rate is high. Accordingly, necessary heat exchange is ensured. In this way, the combustion tube 2 is cooled efficiently.

In the case where the equivalent diameter of the air passage portion 321a decreases step by step (discontinuously) as the air passage portion 321a is closer to the opening 42 serving as the cooling air outlet, separation and re-bonding of the cooling air occur in discontinuous portions. This causes an increase in the heat transfer rate and an increase in the pressure loss. On the other hand, in the case where the equivalent diameter of the air passage portion 321a decreases continuously as the air passage portion 321a is closer to the opening 42 serving as the cooling air outlet, there are no such increase in the heat transfer rate and no such increase in the pressure loss. Whether to decrease the equivalent diameter of the air passage portion 321a step by step (discontinuously) or continuously as the air passage portion 321a is closer to the opening 42 serving as the cooling air outlet can be selected according to design conditions.

Passage shapes stated above can be similarly applied to the air passage portion 32b arranged in the main-nozzle downstream region 2e and the air passage portions 32a and 32b arranged in the inter-main-nozzle downstream region 2f. It is more effective to apply the above-stated passage shapes to passages in the main-nozzle downstream regions 2e rather than to those in the inter-main-nozzle downstream regions 2f.

The passage shapes according to the present embodiment can be similarly applied to the fourth and fifth embodiments.

The embodiments stated above can be carried out in combinations including combinations that are not described specifically.

## Claims

1. A gas turbine combustor comprising:
a fuel supplying section (9); and
a combustion tube (2), wherein said fuel supplying section is arranged to supply fuel to a combustion zone (8) inside said combustion tube (2), wherein
said combustion tube (2) is arranged to supply combustion gas generated by combustion of the fuel to a turbine,
said combustion tube (2) is provided with a first region (2c) where an air passage (30,31,32) through which cooling air can flow is formed and a second region (2d) where a steam passage (51) through which cooling steam can flow is formed,
said second region (2d) is provided downstream of said first region (2c) in a direction of a mainstream flow of said combustion gas,
the combustor being **characterized in that** said air passage (30,31,32) comprises:
a first air passage portion (30);
a second air passage portion (31) extending from said first air passage portion (30) into an upstream direction opposite to the mainstream flow direction of said combustion gas; and
a third air passage portion (32) extending from said first air passage portion (30) into the upstream direction opposite to the mainstream flow direction, and
wherein the arrangement is such that said cooling air passes, in operation, through said second air passage portion (31), said first air passage portion (30) and said third air passage portion (32) in this order and flows into said combustion zone (8).

2. The gas turbine combustor according to claim 1, wherein said first air passage portion (30) comprises a bent portion (30b) provided with a guide plate (30c).

3. The gas turbine combustor according to claim 1, wherein said first air passage portion (30) comprisesa plurality of cavities (30a;30b); and
said second air passage portion (31) and said third air passage portion (32) extend from each of said plurality of cavities (30a;30b) into the upstream direction opposite to the mainstream flow direction,
wherein the arrangement is such that said cooling air passes, in operation, through said second air passage portion (31), the respective one of said cavities (30a; 30b) and said third air passage portion (32) and is supplied to said combustion zone (8), and
said plurality of cavities (30a;30b) are arranged in a circumferential direction of said combustion tube (2), and are separated from each other.

4. The gas turbine combustor according to any of claims 1 to 3, wherein said combustion tube (2) comprises an ejection opening (28a) configured to eject said cooling air in a film along an inner surface of said combustion tube (2) after passing through said air passages (30,31,32).

5. The gas turbine combustor according to any of claims 1 to 4, wherein said steam passage (51) extends in the mainstream flow direction, and
the arrangement is such that said cooling steam flows, in operation, through said steam passage (51) in a direction of said first region (2c).

6. The gas turbine combustor according to any of claims 1 to 5, further comprising:
an acoustic chamber (5) provided in said first region (2c), wherein the arrangement is such that said air passage passes, in operation, said cooling air to a space in said acoustic chamber (5), and
acoustic wave absorbing holes (16) are provided in said first region (2c) to communicate said acoustic chamber space and said combustion zone (8).

7. The gas turbine combustor according to claim 1, wherein said fuel supplying section (9) comprises a plurality of fuel nozzles (14) arranged on a circle having a central axis (S) of said combustion tube (2) as a center,
at least one of said air passage (30,31,32) and said steam passage (51) comprises a plurality of passages (321,322) extending in the mainstream flow direction,
said plurality of passages (321,322) contains a fuel-nozzle corresponding passage (321) arranged downstream of said plurality of fuel nozzles (14) in the mainstream flow direction and an inter-fuel-nozzle corresponding passage (322) arranged between adjacent two of said plurality of fuel nozzles (14) downstream of said plurality of fuel nozzles (14) in the mainstream flow direction, and
an equivalent diameter of said fuel-nozzle corresponding passage (321) is larger than that of said inter-fuel-nozzle corresponding passage (322).

8. The gas turbine combustor according to claim 7, further comprising an acoustic chamber (5) provided in said first region (2c),
wherein said plurality of passages (321,322) are contained in said air passage (32),
each of said fuel-nozzle corresponding passage (321) and said inter-fuel-nozzle corresponding passage (322) is arranged to pass, in operation, the cooling air through an opening (42) provided for said first region (2c) to a space in said acoustic chamber (5),
an acoustic wave absorbing hole (16) is provided in said first region (2c) to communicate said acoustic chamber space and said combustion zone (8), and
said fuel-nozzle corresponding passage (321) includes an equivalent diameter monotonously decreasing section (321a) in which an equivalent diameter decreases monotonously as becoming closer to said opening (42).

9. The gas turbine combustor according to claim 6, wherein said fuel supplying section (9) further comprises a plurality of fuel nozzles (14) arranged on a circle having a central axis (S) of said combustion tube (2) as a center,
said air passage (30,31,32) contains a plurality of passages (321,322) extending in the mainstream flow direction of said combustion gas,
said plurality of passages (321,322) contains a fuel-nozzle corresponding passage (321) arranged downstream of said plurality of fuel nozzles (14) in the mainstream flow direction and an inter-fuel-nozzle corresponding passage (322) arranged between adjacent two of said plurality of fuel nozzles (14) downstream of said plurality of fuel nozzles (14) in the mainstream flow direction,
each of said fuel-nozzle corresponding passage (321) and said inter-fuel-nozzle corresponding passage (322) is arranged to pass, in operation, the cooling air through an opening (42) provided for said first region (2c) to a space in said acoustic chamber (5),
said fuel-nozzle corresponding passage (321) contains an expanded portion (321W) which has locally larger equivalent diameter, and
an equivalent diameter of said inter-fuel-nozzle corresponding passage (322) is uniform without containing an expanded portion.

10. The gas turbine combustor according to claim 9, wherein said fuel-nozzle corresponding passage (321) comprises an equivalent diameter monotonously decreasing portion in which the equivalent diameter decreases monotonously as becoming closer to said opening (42).

11. A method of manufacturing a gas turbine combustor, comprising:
forming an air groove in a first plate (61) for a first region (2c), wherein said first plate (61) is provided with said first region (2c) and a second region (2d);
forming a steam groove in said first plate (61) in said second region (2d);
coupling said first plate (61) and a second plate (62) to each other such that an air passage (30,31,32) corresponding to the air groove and an steam passage (51) corresponding to the steam groove are formed; and
bending said first plate (61) and said second plate (62) such that a combustion tube (2) of said gas turbine combustor is formed,
wherein said first region (2c) is located upstream of said second region (2d) in a direction of a mainstream flow of said combustion gas which flows, in operation, through a combustion zone (8) inside said combustion tube (2),
said forming an air groove comprises:
forming a curved groove (36,37) provided with a guide plate (30c);
forming a first groove extending from one of ends of said curved groove (36,37) to a direction away from said second region (2d); and
forming a second groove extending from the other end of said curved groove (36,37) to the direction away said second region (2d), and
said forming said curved groove (36,37) comprises:
moving an end mill along a U-shaped first track (38) to form a first U-shaped groove (36) in said first plate (61); and
moving an end mill along a U-shaped second track (39) to form a second U-shaped groove (37) in said first plate (61), and
said guide plate (30c) is formed between said first U-shaped groove (36) and said second U-shaped groove (37).

## Patentansprüche

1. Eine Gasturbinenbrennkammer mit:
einem Brennstoff-Zuführabschnitt (9), und
einem Verbrennungsrohr (2), wobei der Brennstoff-Zuführabschnitt angeordnet ist, um Brennstoff zu einer Verbrennungszone (8) im Inneren des Verbrennungsrohrs (2) zuzuführen, wobei
das Verbrennungsrohr (2) angeordnet ist, um durch Verbrennung des Brennstoffes erzeugtes Verbrennungsgas zu einer Turbine zuzuführen,
wobei das Verbrennungsrohr (2) mit einem ersten Bereich (2c), wo ein Luftdurchgang (30,31,32), durch welchen Kühlluft strömen kann, ausgebildet ist, und mit einem zweiten Bereich (2d), wo ein Dampfdurchgang (51), durch welchen Kühldampf strömen kann, ausgebildet ist, versehen ist,
wobei der zweite Bereich (2d) stromab dem ersten Bereich (2c) in einer Richtung einer Hauptströmung des Verbrennungsgases vorgesehen ist,
wobei die Brennkammer **dadurch gekennzeichnet ist, dass** der Luftdurchgang (30,31,32) aufweist:
einen ersten Luftdurchgangsabschnitt (30),
einen zweiten Luftdurchgangsabschnitt (31), der sich von dem ersten Luftdurchgangsabschnitt (30) in einer Stromaufrichtung entgegengesetzt der Hauptströmungsrichtung des Verbrennungsgases erstreckt, und
einen dritten Luftdurchgangsabschnitt (32), der sich von dem ersten Luftdurchgangsabschnitt (30) in der Stromaufrichtung entgegengesetzt der Hauptströmungsrichtung erstreckt, und
wobei die Anordnung so ist, dass die Kühlluft im Betrieb durch den zweiten Luftdurchgangsabschnitt (31), den ersten Luftdurchgangsabschnitt (30) und den dritten Luftdurchgangsabschnitt (32) in dieser Reihenfolge passiert und in die Verbrennungszone (8) einströmt.

2. Die Gasturbinenbrennkammer gemäß Anspruch 1, wobei der erste Luftdurchgangsabschnitt (30) einen gebogenen Abschnitt (30b) aufweist, der mit einer Leitplatte (30c) versehen ist.

3. Die Gasturbinenbrennkammer gemäß Anspruch 1, wobei der erste Luftdurchgangsabschnitt (30) eine Vielzahl von Hohlräumen (30a;30b) aufweist, und
der zweite Luftdurchgangsabschnitt (31) und der dritte Luftdurchgangsabschnitt (32) sich von jedem der Vielzahl von Hohlräumen (30a;30b) in der Stromaufrichtung entgegengesetzt zu der Hauptströmungsrichtung erstrecken,
wobei die Anordnung so ist, dass die Kühlluft im Betrieb durch den zweiten Luftdurchgangsabschnitt (31), den jeweiligen der Hohlräume (30a;30b) und den dritten Luftströmungsdurchgang (32) passiert und der Verbrennungszone (8) zugeführt wird, und
die Vielzahl von Hohlräumen (30a;30b) in einer Umfangsrichtung des Verbrennungsrohrs (2) angeordnet und voneinander getrennt sind.

4. Die Gasturbinenbrennkammer gemäß einem der Ansprüche 1 bis 3, wobei das Verbrennungsrohr (2) eine Ausstoßöffnung (28a) aufweist, die konfiguriert ist, um die Kühlluft in einer Schicht entlang einer Innenfläche des Verbrennungsrohrs (2) auszustoßen, nachdem sie durch die Luftdurchgänge (30,31,32) passiert ist.

5. Die Gasturbinenbrennkammer gemäß einem der Ansprüche 1 bis 4, wobei der Dampfdurchgang (51) sich in der Hauptströmungsrichtung erstreckt, und
die Anordnung so ist, dass der Kühldampf im Betrieb durch den Dampfdurchgang (51) in einer Richtung des ersten Bereichs (2c) strömt.

6. Die Gasturbinenbrennkammer gemäß einem der Ansprüche 1 bis 5, ferner mit:
einer Akustikkammer (5), die in dem ersten Bereich (2c) vorgesehen ist, wobei die Anordnung so ist, dass der Luftdurchgang im Betrieb die Kühlluft zu einem Raum in der Akustikkammer (5) leitet, und
wobei Akustikwellen-Absorptionslöcher (16) in dem ersten Bereich (2c) vorgesehen sind, um den Akustikkammerraum und die Verbrennungszone (8) zu verbinden.

7. Die Gasturbinenbrennkammer gemäß Anspruch 1, wobei der Brennstoff-Zuführabschnitt (9) eine Vielzahl von Brennstoffdüsen (14) aufweist, die an einem Kreis mit einer Mittelachse (S) des Verbrennungsrohrs (2) als eine Mitte angeordnet sind,
mindestens einer von den Luftdurchgängen (30,31,32) und dem Dampfdurchgang (51) eine Vielzahl von Durchgängen (321,322) aufweist, die sich in der Hauptströmungsrichtung erstrecken,
die Vielzahl von Durchgängen (321,322) einen Brennstoffdüsen-Entsprechungsdurchgang (321), der stromab der Vielzahl von Brennstoffdüsen (14) in der Hauptströmungsrichtung angeordnet ist, und einen Zwischen-Brennstoffdüsen-Entsprechungsdurchgang (322), der zwischen benachbarten zwei der Vielzahl von Brennstoffdüsen (14) stromab der Vielzahl von Brennstoffdüsen (14) in der Hauptströmungsrichtung angeordnet ist, aufweist, und
ein äquivalenter Durchmesser des Brennstoffdüsen-Entsprechungsdurchgangs (321) größer ist als der des Zwischen-Brennstoffdüsen-Entsprechungsdurchgangs (322).

8. Die Gasturbinenbrennkammer gemäß Anspruch 7, ferner mit einer Akustikkammer (5), die in dem ersten Bereich (2c) vorgesehen ist,
wobei die Vielzahl von Durchgängen (321,322) in dem Luftdurchgang (32) enthalten sind,
jeder von dem Brennstoffdüsen-Entsprechungsdurchgang (321) und dem Zwischen-Brennstoffdüsen-Entsprechungsdurchgang (322) angeordnet ist, um im Betrieb die Kühlluft durch eine Öffnung (42), die für den ersten Bereich (2c) vorgesehen ist, zu einem Raum in der Akustikkammer (5) zu leiten,
ein Akustikwellen-Absorptionsloch (16) in dem ersten Bereich (2c) vorgesehen ist, um den Akustikkammerraum und die Verbrennungszone (8) zu verbinden, und
der Brennstoffdüsen-Entsprechungsdurchgang (321) einen Abschnitt mit monoton abnehmendem äquivalentem Durchmesser (321a) aufweist, in dem ein äquivalenter Durchmesser mit Annäherung an die Öffnung (42) monoton abnimmt.

9. Die Gasturbinenbrennkammer gemäß Anspruch 6, wobei der Brennstoff-Zuführabschnitt (9) ferner eine Vielzahl von Brennstoffdüsen (14) aufweist, die an einem Kreis mit einer Mittelachse (S) des Verbrennungsrohrs (2) als eine Mitte angeordnet sind,
der Luftdurchgang (30,31,32) eine Vielzahl von Durchgängen (321,322) enthält, die sich in der Hauptströmungsrichtung des Verbrennungsgases erstrecken,
die Vielzahl von Durchgängen (321,322) einen Brennstoffdüsen-Entsprechungsdurchgang (321), der stromab der Vielzahl von Brennstoffdüsen (14) in der Hauptströmungsrichtung angeordnet ist, und einen Zwischen-Brennstoffdüsen-Entsprechungsdurchgang (322), der zwischen benachbarten zwei der Vielzahl von Brennstoffdüsen (14) stromab der Vielzahl von Brennstoffdüsen (14) in der Hauptströmungsrichtung angeordnet ist, aufweist,
wobei jeder von dem Brennstoffdüsen-Entsprechungsdurchgang (321) und dem Zwischen-Brennstoffdüsen-Entsprechungsdurchgang (322) angeordnet ist, um im Betrieb die Kühlluft durch eine Öffnung (42), die für den ersten Bereich (2c) vorgesehen ist, zu einem Raum in der Akustikkammer (5) zu leiten,
wobei der Brennstoffdüsen-Entsprechungsdurchgang (321) einen erweiterten Abschnitt (321W) enthält, der einen lokal größeren äquivalenten Durchmesser besitzt, und
ein äquivalenter Durchmesser des Zwischen-Brennstoffdüsen-Entsprechungsdurchgangs (322) gleichmäßig ist und keinen erweiterten Abschnitt enthält.

10. Die Gasturbinenbrennkammer gemäß Anspruch 9, wobei der Brennstoffdüsen-Entsprechungsdurchgang (321) einen Abschnitt mit monoton abnehmendem äquivalentem Durchmesser aufweist, in dem der äquivalente Durchmesser mit Annäherung an die Öffnung (42) monoton abnimmt.

11. Ein Verfahren zum Herstellen einer Gasturbinenbrennkammer, mit:
Ausbilden einer Ausnehmung für Luft in einer ersten Platte (61) für einen ersten Bereich (2c), wobei die erste Platte (61) mit dem ersten Bereich (2c) und einem zweiten Bereich (2d) versehen ist,
Ausbilden einer Ausnehmung für Dampf in der ersten Platte (61) in dem zweiten Bereich (2d),
Koppeln der ersten Platte (61) und der zweiten Platte (62) miteinander, derart, dass ein Luftdurchgang (30,31,32) entsprechend der Ausnehmung für Luft und ein Dampfdurchgang (51) entsprechend der Ausnehmung für Dampf gebildet werden, und
Biegen der ersten Platte (61) und der zweiten Platte (62) derart, dass ein Verbrennungsrohr (2) der Gasturbinenbrennkammer gebildet wird,
wobei der erste Bereich (2c) stromauf des zweiten Bereichs (2d) in einer Richtung einer Hauptströmung des Verbrennungsgases angeordnet ist, welches im Betrieb durch eine Verbrennungszone (8) im Inneren des Verbrennungsrohrs (2) strömt,
wobei das Ausbilden einer Ausnehmung für Luft aufweist:
Ausbilden einer gekrümmten Ausnehmung (36,37), die mit einer Leitplatte (30c) versehen ist,
Ausbilden einer ersten Ausnehmung, die sich von einem von Enden von der gekrümmten Ausnehmung (36,37) in einer Richtung weg von dem zweiten Bereich (2d) erstreckt, und
Ausbilden einer zweiten Ausnehmung, die sich von dem anderen Ende der gekrümmten Ausnehmung (36,37) in der Richtung weg von dem zweiten Bereich (2d) erstreckt, und
wobei das Ausbilden der gekrümmten Ausnehmung (36,37) aufweist:
Bewegen eines Schaftfräsers entlang einer U-förmigen ersten Bahn (38), um eine erste U-förmige Ausnehmung (36) in der ersten Platte (61) auszubilden, und
Bewegen eines Schaftfräsers entlang einer U-förmigen zweiten Bahn (39), um eine zweite U-förmige Ausnehmung (37) in der ersten Platte (61) auszubilden, und
wobei die erste Platte (30c) zwischen der ersten U-förmigen Ausnehmung (36) und der zweiten U-förmigen Ausnehmung (37) gebildet wird.

## Revendications

1. Chambre de combustion de turbine à gaz comprenant :
une section (9) d'alimentation en combustible; et
un tube (2) de combustion, la section d'alimentation en combustible étant agencée pour envoyer du combustible à une zone (8) de combustion à l'intérieur du tube (2) de combustion, dans laquelle
le tube (2) de combustion est agencé pour envoyer des gaz de combustion créés par combustion du combustible à une turbine,
le tube (2) de combustion est pourvu d'une première région (2c) où est formé un passage (30, 31, 32) pour de l'air, dans lequel de l'air de refroidissement peut passer, et une deuxième section (2d) où est formé un passage (51) pour de la vapeur, dans lequel de la vapeur de refroidissement peut passer,
la deuxième région (2d) est pourvue en aval de la première région (2c) est prévue en aval de la première région (2c) dans un sens d'un écoulement de courant principal des gaz de combustion,
la chambre de combustion étant **caractérisée en ce que** le passage (30, 31, 32) pour de l'air comprend :
une première partie (30) de passage pour de l'air;
une deuxième partie (31) de passage pour de l'air s'étendant de la première partie (30) de passage pour de l'air dans un sens en amont opposé au sens d'écoulement du courant principal des gaz de combustion; et
une troisième partie (32) de passage pour de l'air s'étendant de la première partie (30) de passage pour de l'air dans le sens en amont opposé au sens d'écoulement du courant principal, et
dans lequel l'agencement est tel que l'air de refroidissement passe en fonctionnement dans la deuxième partie (31) de passage pour de l'air, dans la première partie (30) de passage pour de l'air et dans la troisième partie (32) de passage pour de l'air dans cet ordre et va dans la zone (8) de combustion.

2. Chambre de combustion de turbine à gaz suivant la revendication 1, dans laquelle la première partie (30) de passage pour de l'air comprend une partie (30b) courbée pourvue d'une plaque (30c) de guidage.

3. Chambre de combustion de turbine à gaz suivant la revendication 1, dans laquelle la première partie (30) de passage pour de l'air comprend une pluralité de cavités (30a; 30b); et
la deuxième partie (31) de passage pour de l'air et la troisième partie (32) de passage pour de l'air s'étendent de chacune de la pluralité de cavités (30a; 30b) dans le sens en amont opposé au sens d'écoulement du courant principal,
dans laquelle l'agencement est tel que l'air de refroidissement passe en fonctionnement dans la deuxième partie (31) de passage pour de l'air, dans l'une respective des cavités (30a; 30b) et dans la troisième partie (32) de passage pour de l'air et est envoyé à la zone (8) de combustion, et
la pluralité de cavités (30a; 30b) sont agencées dans une direction circonférentielle du tube (2) de combustion et sont séparées les unes des autres.

4. Chambre de combustion de turbine à gaz suivant l'une quelconque des revendications 1 à 3, dans laquelle le tube (2) de combustion comprend une ouverture (28a) d'éjection configurée pour éjecter l'air de refroidissement en une pellicule le long d'une surface intérieure du tube (2) de combustion après passage dans les passages (30, 31, 32) pour de l'air.

5. Chambre de combustion de turbine à gaz suivant l'une quelconque des revendications 1 à 4, dans laquelle le passage (51) pour de la vapeur s'étend dans le sens d'écoulement du courant principal, et
l'agencement est tel que la vapeur de refroidissement passe, en fonctionnement, dans le passage (51) pour de la vapeur dans le sens de la première région (2c).

6. Chambre de combustion de turbine à gaz suivant l'une quelconque des revendications 1 à 5, comprenant en outre :
une chambre (5) acoustique prévue dans la première région (2c), dans laquelle l'agencement étant tel que le passage pour de l'air fait passer en fonctionnement l'air de refroidissement vers un espace de la chambre (5) acoustique, et
des trous (16) d'absorption des ondes acoustiques sont prévus dans la première région (2c) pour mettre l'espace de la chambre acoustique et la zone (8) de combustion en communication.

7. Chambre de combustion de turbine à gaz suivant la revendication 1, dans laquelle la section (9) d'alimentation en combustible comprend une pluralité de buses (14) à combustible agencées sur un cercle ayant un axe (S) central du tube (2) de combustion comme centre,
au moins l'un des passages (30, 31, 32) pour de l'air et du passage (51) pour de la vapeur comprend une pluralité de passages (321, 322) s'étendant dans le sens d'écoulement du courant principal,
la pluralité de passages (321, 322) comporte un passage (321) correspondant à une buse à combustible disposée en aval de la pluralité des buses (14) à combustible dans le sens d'écoulement du courant principal et un passage (322) correspondant à une buse inter-combustible disposée entre deux buses (14) à combustible voisines de la pluralité en aval de la pluralité des buses (14) à combustible dans le sens d'écoulement du courant principal, et
un diamètre équivalent du passage (321) correspondant à une buse à combustible est plus grand que celui du passage (322) correspondant à la buse inter-combustible.

8. Chambre de combustion de turbine à gaz suivant la revendication 7, comprenant en outre une chambre (5) acoustique prévue dans la première région (2c),
dans laquelle la pluralité de passages (321, 322) sont contenus dans le passage (32) pour de l'air,
chacun du passage (321) correspondant à une buse à combustible et du passage (322) correspondant à une buse inter-combustible est agencé pour faire passer en fonctionnement l'air de refroidissement dans une ouverture (42) prévue pour la première région(2c) vers un espace de la chambre (5) acoustique,
un trou (16) d'absorption des ondes acoustiques est prévu dans la première région (2c) pour mettre l'espace de la chambre acoustique en communication avec la zone (8) de combustion, et
le passage (321) correspondant à une buse à combustible comprend une section (321a) dont le diamètre équivalent diminue d'une manière monotone, dans laquelle un diamètre équivalent diminue d'une manière monotone au fur et à mesure qu'il est plus près de l'ouverture (42).

9. Chambre de combustion de turbine à gaz suivant la revendication 6, dans laquelle la section (9) d'alimentation en combustible comprend en outre une pluralité de buses (14) à combustible disposées sur un cercle ayant un axe (S) central du tube (2) de combustion comme centre,
le passage (30, 31, 32) pour de l'air comporte une pluralité de passages (321, 322) s'étendant dans le sens d'écoulement du courant principal des gaz de combustion,
la pluralité de passages (321, 322) comportent un passage (321) correspondant à une buse à combustible montée en aval de la pluralité de buses (14) à combustible dans le sens d'écoulement du courant principal et un passage (322) correspondant à une buse inter-combustible monté entre deux buses (14)à combustible voisines de la pluralité de buses (14) à combustible en aval de la pluralité de buses (14) à combustible dans le sens d'écoulement du courant principal,
chacun du passage (321) correspondant à une buse à combustible et du passage (322) correspondant à une buse à inter-combustible étant agencé pour faire passer en fonctionnement l'air de refroidissement dans une ouverture (42) prévue pour la première région (2c) vers un espace de la chambre (5) acoustique,
le passage (321) correspondant à une buse à combustible contient une partie (321W) agrandie qui a un diamètre équivalent plus grand localement, et
un diamètre équivalent du passage (322) correspondant à une buse à inter-combustible est uniforme sans avoir de partie agrandie.

10. Chambre de combustion de turbine à gaz suivant la revendication 9, dans laquelle le passage (321) correspondant à une buse à combustible comprend une partie de diminution monotone du diamètre équivalent dans laquelle le diamètre équivalent décroît d'une manière monotone au fur et à mesure qu'il se rapproche de l'ouverture (42).

11. Procédé de fabrication d'une chambre de combustion de turbine à gaz, dans lequel :
on forme une rainure pour de l'air dans une première plaque (61) pour une première région (2c), la première plaque (61) étant pourvue d'une première région (2c) et d'une deuxième région (2d);
on forme une rainure pour de la vapeur dans la première plaque (61) dans la deuxième région (2d);
on couple la première plaque (61) et une deuxième plaque (62) l'une à l'autre de manière à former un passage (30, 31, 32) pour de l'air correspondant à la rainure pour de l'air et un passage (51) pour de la vapeur correspondant à la rainure pour la vapeur; et
on courbe la première plaque (61) et la deuxième plaque (62) de manière à former un tube (2) de combustion de la chambre de combustion à turbine à gaz,
dans lequel la première région (2c) est placée en amont de la deuxième région (2d) dans un sens d'un écoulement de courant principal des gaz de combustion qui passe en fonctionnement dans une zone (8) de combustion à l'intérieur du tube (2) de combustion,
former une rainure pour de l'air comprend :
former une rainure (36, 37) incurvée pourvue d'une plaque (30c) de guidage;
former une première rainure s'étendant de l'une des extrémités de la rainure (36, 37) incurvée dans la direction s'éloignant de la deuxième région (2d); et
former une deuxième rainure s'étendant de l'autre extrémité de la rainure (36, 37) incurvée dans une direction s'éloignant de la deuxième région (2d), et
former la rainure (36, 37) incurvée comprend :
déplacer une fraise le long d'une première piste (38) en forme de U pour former une première rainure (36) en forme de U dans la première plaque (61); et
déplacer une fraise le long d'une deuxième piste (39) en forme de U pour former une deuxième rainure (37) en forme de U dans la première plaque (61), et
la plaque (30c) de guidage est formée entre la première rainure (36) en forme de U et la deuxième rainure (37) en forme de U.
